# EUROPÄISCHE PATENTANMELDUNG

(11) **EP 1 900 765 A1**
(43) Veröffentlichungstag der Anmeldung: **19.03.2008**
(21) Anmeldenummer: 07114223.6
(22) Anmeldetag: 13.08.2007
(51) Int. Cl.: C08G 77/38, C08G 77/46

(54) **Neue polycarboxyfunktionelle Organosiloxanylderivate und deren Verwendung zur Behandlung von Leder**

(30) Priorität: 13.09.2006 DE 102006042869
(71) Anmelder: Evonik Goldschmidt GmbH, 45127 Essen (DE)
(72) Erfinder: Maurer, Tobias Dr., 42551, Velbert (DE); Herrwerth, Sascha Dr., 45134, Essen (DE); Koenig, Frank, 45884, Gelsenkirchen (DE); Stadtmüller, Stefan Dr., 45481, Mülheim (DE)

(57) **Zusammenfassung**

Ein Gegenstand der Erfindung sind Organosiloxanverbindungen, enthaltend end- und/oder seitenständig mindestens einen mehrfach polycarboxylierten, organischen Rest, der im Mittel ≥ 1 Carboxylgruppen aufweist, erhältlich durch Anlagerung von Organopolysiloxanen der allgemeinen Formel I 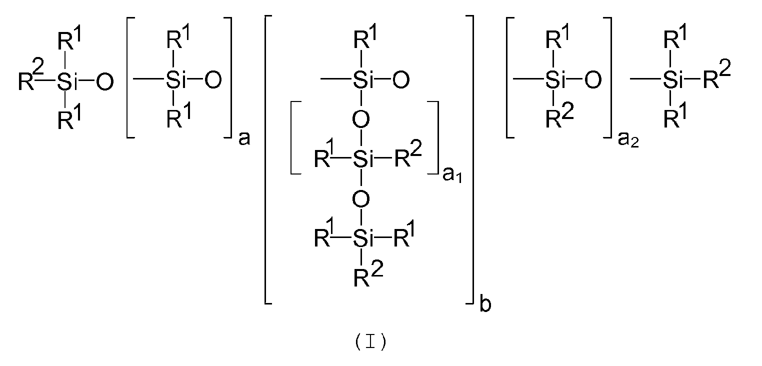 an Polyhydroxyalkenylether der allgemeinen Formel II

H₂C=CH-(CH₂)_{c}-O-CH₂-R³-[(CH₂-O-(CR⁴H-CH₂-O)ₑ-H)]_{d} (II)

oder Glycerinmonoallylether in Gegenwart von Platin- oder Rhodiumkatalysatoren und anschließender Umsetzung mit, bezogen auf Hydroxylgruppen, 0,6- bis 1,2 molaren Mengen organischer Carbonsäureanhydride der allgemeinen Formel 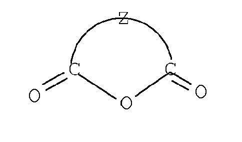 sowie deren Verwendung zur Behandlung von Leder.

## Beschreibung

Die Erfindung betrifft neuartige polycarboxyfunktionelle Organosiloxanylderivate und deren Verwendung zur Behandlung der Oberfläche von Leder.

Naturbelassenes Leder ist aufgrund seiner chemischen Struktur und seines faserigen Aufbaus anfällig gegen Schmutz und Nässe. So positiv sich seine Saugfähigkeit, Wasseraufnahmekapazität und Durchlässigkeit bei Bekleidung und Schuhwerk in Bezug auf körpereigenen Schweiß auswirkt, so negativ wird dieses Verhalten bei Einwirkung von außen kommender Nässe beurteilt.

Eine wichtige Voraussetzung für die Gebrauchsfähigkeit von Lederbekleidung bei der privaten und gewerblichen Anwendung sind seine wasserdichten oder zumindest weitgehend wasserabweisenden Eigenschaften.

Zur Erzielung dieses Effektes wurden in der Vergangenheit bereits Imprägniermittel auf Basis tierischer, pflanzlicher und synthetischer Produkte eingesetzt.

Aufgrund ihrer anwendungstechnischen Eigenschaften haben sich die synthetischen Mittel weitgehend durchgesetzt und hier insbesondere die Polysiloxane in ihren verschiedenen Modifizierungen.

Polysiloxane besitzen gegenüber Wasser eine hohe Grenzflächenspannung und lassen aufgrund der stark reduzierten Adhäsion zu Wasser dessen Kohäsionskräfte voll zur Wirkung kommen mit dem Effekt, dass die sich bildenden Kugeln und Tropfen von der Oberfläche abperlen.

Zur Erhöhung der rein mechanischen und elektrostatischen (van der Waals) Haftungskräfte der Polysiloxane wurden funktionelle Gruppen, wie insbesondere Carboxylgruppen, in das Molekül eingebaut. Über diese Gruppen wird das Polysiloxan durch die Anwesenheit von Chromsalzen fest an die Fasern des Leders gebunden.

Im Vergleich zu den bis dahin verwendeten Imprägniermitteln konnte eine deutliche Langzeitwirkung erzielt werden, da die Hydrophobierung gegen Scheuern, Abrieb oder andere äußere mechanische Belastungen beständiger ist.

In der EP-A 0 745 141 wird ein Verfahren zum Hydrophobieren von Leder und Pelzfellen in wässrigen Emulsionen und in Gegenwart von Emulgatoren mit kammartig carboxylfunktionalisierten Polysiloxanen beschrieben, bei denen die Mono-Carboxylgruppen über Spacergruppen in Form von linearen oder verzweigten C₂-C₄₀-Alkylengruppen, welche ebenfalls Heteroatome oder Heterogruppen enthalten können, an die Polymerhauptkette gebunden sind.

In der EP-A 0 324 345 wird ein Verfahren zum Hydrophobieren von Leder, Pelzen und Lederaustauschstoffen beschrieben, gemäß dem Polysiloxane mit vorzugsweise endständigen Carboxylgruppen verwendet werden, deren Carboxylgruppen in neutralisierter Form vorliegen.

Die WO-A-93/22464 beschreibt ein Verfahren zum Hydrophobieren von Leder, Pelzen und Lederaustauschstoffen unter Verwendung von aus Polyolen und Maleinsäurenhydrid und Sulfiten hergestellten Sulfobernsteinsäureestern als Hydrophobiermittel, gemäß welchem als Polyole auch alpha-/omega-OH-funktionelle Polysiloxane verwendet werden können.

In der EP-A 1 445 273 werden lineare α.ω-Organosiloxanylderivate mit 1 bis 4 carboxilierten Resten der allgemeinen Formel

-(Y)-[O(C₂H_{4-b}(R³)_{b}O)_{c}(C_{d}H_{2d}O)ₑ-C(O)-Z-COOH]_{f}

beschrieben, in der
- Y =: ein(f + 1)-bindiger, gegebenenfalls verzweigter Kohlenwasserstoffrest mit 3 bis 12 C-Atomen,
- b =: 1 bis 3,
- c =: 0 bis 20,
- d =: 2 bis 4,
- e =: 0 bis 20,
- f =: 1 bis 4 und
- Z =: ein zweiwertiger

Kohlenwasserstoffrest ist, und deren Verwendung als Zusatzstoffe für Lederbehandlungsmittel.

Die hydrophobierende Wirkung dieser Verbindungen ist aber weiterhin verbesserungsbedürftig in Bezug auf Hydrophobierung, Flexibilität, Abriebbeständigkeit und Beständigkeit gegen extreme äußere Belastungen, wie sie insbesondere bei sportlichem Out-Door-Einsatz, bei industriell oder militärisch genutzter Arbeitskleidung, Schutzbekleidung oder dem dortigen Schuhwerk auftreten.

Aufgabe der vorliegenden Erfindung war es daher, Hydrophobierungsmittel für Leder zu finden, welche auch unter erschwerten äußeren Belastungen verbesserte anwendungstechnische Eigenschaften aufweisen.

Es ist eine Aufgabe dieser Erfindung, Leder, wie insbesondere Bekleidungsleder, bei voller Erhaltung von Elastizität und Weichheit, wasserabweisend auszurüsten. Bei der Behandlung soll nicht die Lederoberfläche mit einem dünnen Film überzogen werden, sondern das Hydrophobierungsmittel soll in das Leder eindringen und sich an die Lederfaser binden, so dass das Leder atmungsaktiv bleibt.

Diese Aufgabe wird gelöst durch Verwendung neuartiger Organosiloxanverbindungen, die end- und/oder seitenständig mindestens einen mehrfach carboxylierten, organischen Rest, der im Mittel ≥ 1 Carboxylgruppe aufweist.

Ein Gegenstand der Erfindung sind daher neuartige Organosiloxanverbindungen, enthaltend end- und/oder seitenständig mindestens einen mehrfach carboxylierten organischen Rest, der im Mittel ≥ 1, vorzugsweise ≥ 2, Carboxylgruppen aufweist, erhältlich durch Anlagerung von Organopolysiloxanen der allgemeinen Formel I 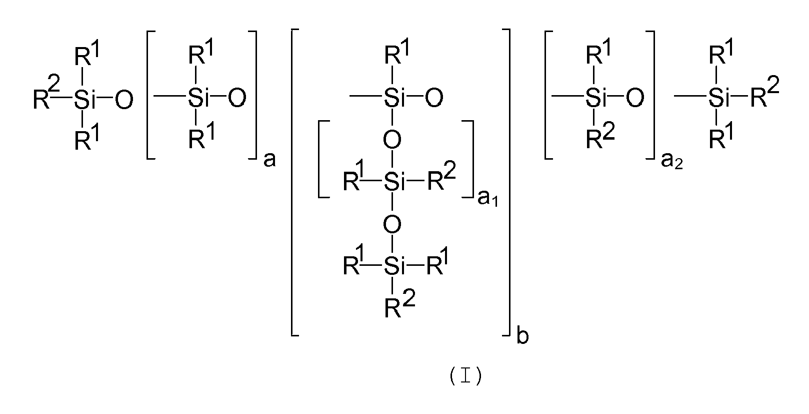 worin die Substituenten und Indices bedeuten:
- R¹ =: gleiche oder verschiedene, aliphatische oder aromatische Kohlenwasserstoffreste mit 1 bis 10 C-Atomen, vorzugsweise CH₃ oder Phenyl,
- R² =: R¹ oder H, mit der Maßgabe, dass mindestens ein Rest _{R}² gleich H ist,
- a, a₁, a₂=: sind gleich oder verschieden 0 bis 500, vorzugsweise 0 bis 200, insbesondere 10 bis 100,
- b =: 0 bis 20, vorzugsweise 0 bis 10, an Polyhydroxyalkenylether der allgemeinen Formel II

H₂C=CH- (CH₂)_{c}-O-CH₂-R³-[(CH₂-O-(CR⁴H-CH₂-O)ₑ-H)]_{d} (II)
- R³ =: ein gegebenenfalls Etherbrücken enthaltender linearer, cyclischer, aromatischer oder verzweigter Kohlenwasserstoffrest mit 1 bis 20 C-Atomen,
- R⁴ =: H oder ein C₁ bis C₃ Alkylrest oder ein Phenylrest, vorzugsweise in einem durchschnittlichen Verhältnis von Kohlenstoffatomen zu Sauerstoffatomen von ≥ 2,3, insbesondere ≥ 2,8,
- c =: 0 bis 10, vorzugsweise 0 bis 5,
- d =: 2 bis 10, vorzugsweise 2 bis 6,
- e =: 0 bis 40, vorzugsweise 0 bis 20
in Gegenwart von Platin- oder Rhodiumkatalysatoren und anschließender Umsetzung mit, bezogen auf Hydroxylgruppen, 0,6- bis 1,2-molaren Mengen organischer Carbonsäureanhydride der allgemeinen Formel 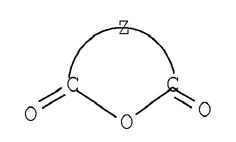 wobei
- Z =: zweiwertiger Kohlenwasserstoffrest, ausgewählt aus der Gruppe 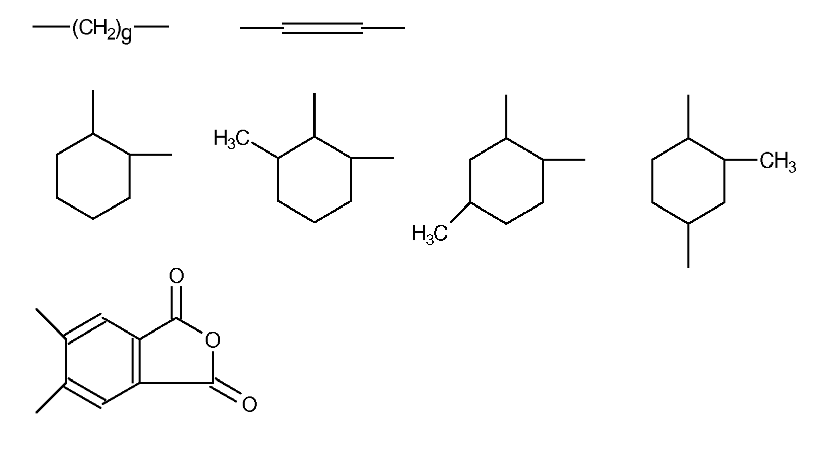 mit
- g =: 1 bis 12
umsetzt.

R¹ kann innerhalb des polymeren Moleküls gleich oder verschieden sein und die Bedeutung eines niederen Alkylrestes mit 1 bis 10 C-Atomen oder eines Phenylrestes haben. Die Alkylreste können geradkettig oder verzweigt vorliegen. Vorzugsweise sind mindestens 90 % der Reste R¹ Methylreste.

Beispiele für den Rest R³ sind Alkylreste mit 1 bis 20 C-Atomen, bevorzugt 1 bis 10, besonders bevorzugt 3 bis 8 C-Atomen. Der Index c ist vorzugsweise 0 bis 5, d ist vorzugsweise 2 bis 6. Insbesondere bevorzugt ist c = 1 und d = 2 bis 5.

Das Siloxangerüst kann geradkettig (b = 0) oder aber verzweigt sein (> 0 bis 10). Der Wert von b wie auch der Wert von a sind als durchschnittliche Werte im Polymermolekül zu verstehen, da die erfindungsgemäß zu verwendenden Polysiloxane in Form von - im Regelfall - equilibrierten Gemischen vorliegen. Es ist dem Fachmann geläufig, dass die Verbindungen aufgrund ihrer polymeren Natur in Form eines Gemisches mit einer im Wesentlichen durch statistische Gesetze geregelten Verteilung vorliegen. Die Werte für alle Indices stellen deshalb Mittelwerte dar.

Beispiele für geeignete Polyhydroxyalkenylether der Formel II, die sowohl über mindestens eine hydrosilylierbare Doppelbindung als auch über mindestens zwei veresterbare primäre Hydroxylgruppen verfügen, sind:

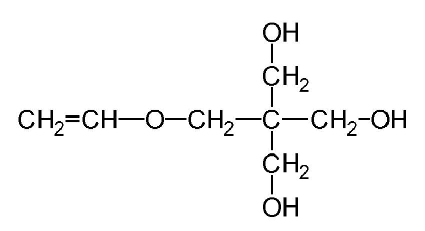

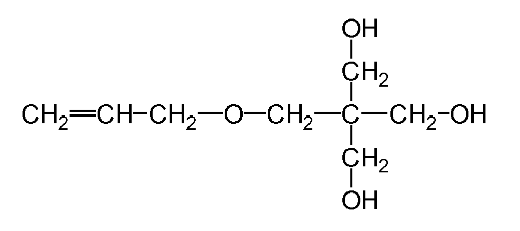

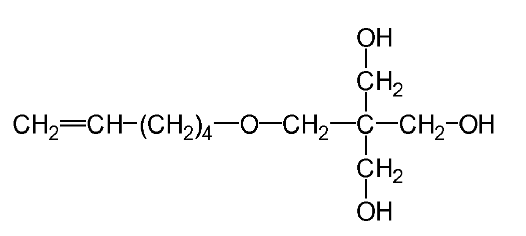

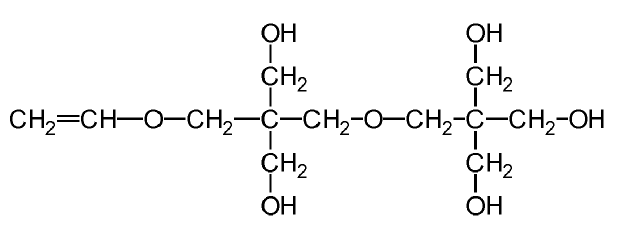

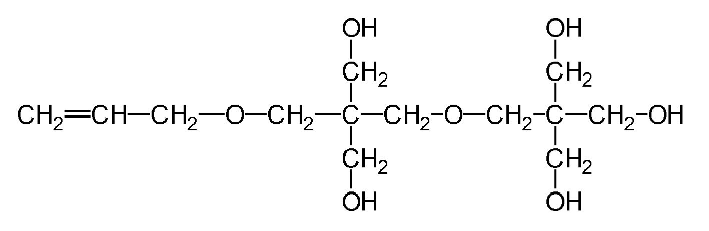

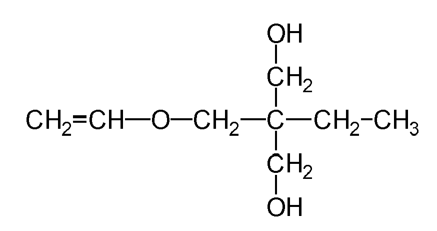

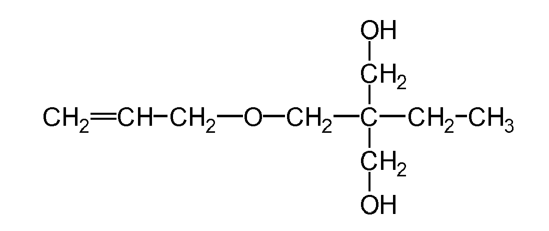

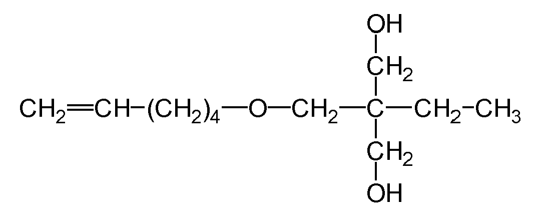

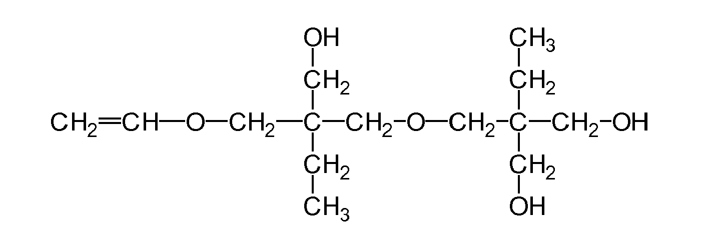

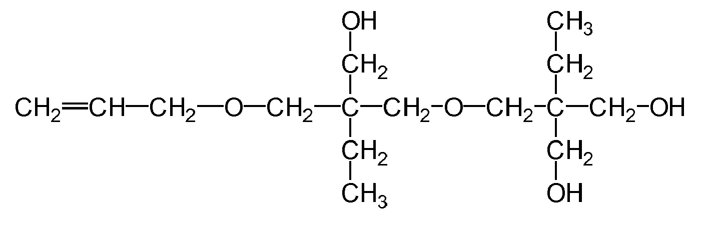

Ein weiterer geeigneter Polyhydroxyalkenylether ist Glycerinmonoallylether.

Die erfindungsgemäßen polycarboxyfunktionellen Organosiloxanverbindungen zeichnen sich aufgrund ihrer Viskositäten, die im Bereich von 50 bis 10 000 mPa s (25°C) liegen, durch ihre gute Einarbeitbarkeit in wässrigen Emulsionen aus.

Ein weiterer Gegenstand der Erfindung ist die Verwendung dieser polycarboxyfunktionellen Organosiloxanverbindungen der allgemeinen Formel (I) zur Behandlung von Leder. In diesen Formulierungen können die erfindungsgemäßen Verbindungen auch in ihrer neutralisierten Form vorliegen.

Weitere Gegenstände der Erfindung sind durch die Ansprüche gekennzeichnet.

Aufgrund ihrer speziellen Struktur besitzen die erfindungsgemäßen polycarboxyfunktionellen Organosiloxanverbindungen eine höhere, negativ geladene Funktionaldichte, die mit der positiv geladenen Oberfläche des Leders oder Gewebes in eine verstärkte chemische Wechselwirkung treten kann, woraus eine erhöhte Verankerung und Anhaftung resultiert mit einer dauerhafteren Hydrophobierung und Wasserabweisung, verbesserten Weichgriffeigenschaften und verbesserten mechanischen Beständigkeiten.

Die erfindungsgemäßen polycarboxyfunktionellen Organosiloxanverbindungen werden üblicherweise aus wässrigen oder lösemittelhaltigen Präparationen appliziert. Diese Präparationen können auf einfache Weise hergestellt werden, wie zum Beispiel durch einen einfachen Rührvorgang in Gegenwart eines Emulgators.

Nachfolgende Beispiele sollen zur Verdeutlichung der Erfindung dienen. Sie stellen jedoch keinerlei Einschränkung dar.

### BEISPIELE:

### Beispiel 1

1a) 91 g (30 % Überschuss) 1,1,1-Tris-(hydroxymethyl)-propan-monoallylether werden in einem 1-1-Vierhalskolben, ausgestattet mit Intensivkühler, Thermometer und Tropftrichter, zusammen mit 10 ppm eines Pt-haltigen Katalysators in inerter Atmosphäre auf 100 °C aufgeheizt. Bei Erreichen der Temperatur werden 440 g endständig Si-H-funktionalisiertes Polydimethylsiloxan der mittleren Kettenlänge N = 30 und der allgemeinen Formel HMe₂SiO(SiMe₂O)₃₀SiMe₂H (SiH-Wert: 0,91 mol H/kg) innerhalb von 30 Minuten zugetropft. Nach beendeter Zugabe wird das Reaktionsgemisch noch solange bei 100 °C gerührt, bis nach ca. 3 Stunden der Umsatz > 99,5 % erreicht wird.
   Nach Filtration von Katalysatorresten (der Überschuss 1,1,1-Tris-(hydroxymethyl)-propan-monoallylether wird nicht abdestilliert) erhält man ein niedrigviskoses Öl mit einer Hydroxylzahl von 106 mg KOH/g, dem laut ¹H- und ²⁹Si-NMR-Spektren die allgemeine Formel zukommt: 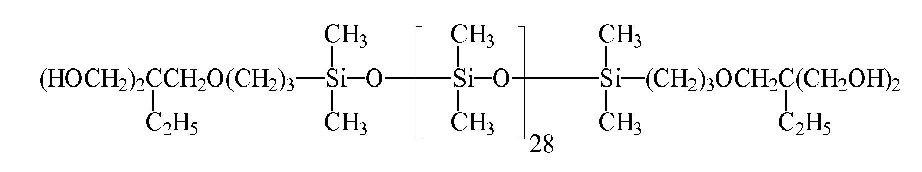
1b) Anlagerung von 4-Methylhexahydrophthalsäureanhydrid an das unter 1a) beschriebene α.ω-Bis-hydroxyalkylsiloxan:
   In einem Dreihalskolben, der mit einem Intensivkühler, Thermometer und Tropftrichter sowie einem Stickstoffanschluss ausgerüstet ist, werden in einer Stickstoffatmosphäre 143 g Methylhexahydrophthalsäureanhydrid und 450 g des unter 1a) beschriebenen α.ω-Bis-hydroxyalkylsiloxan mit einer Hydroxylzahl von 106 mg KOH/g gemischt. Die Lösung wird auf 120 °C aufgeheizt und bei dieser Temperatur 6 Stunden gerührt. Das Produkt wird nach dem Abkühlen auf Raumtemperatur filtriert. Es wird ein klares, flüssiges Produkt erhalten.
   Gemäß ²⁹Si-NMR- und ¹³C-NMR-spektroskopischer Resultate besitzt das Endprodukt nachfolgende Struktur:

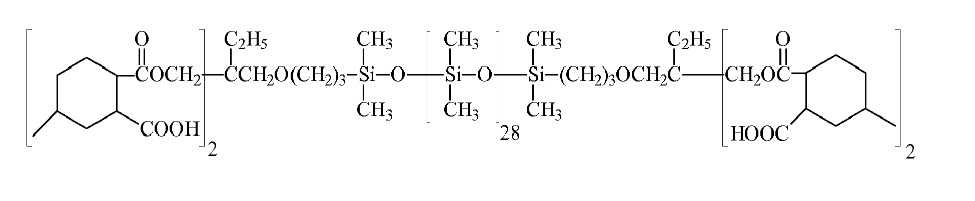

### Beispiel 2

2a) 57 g (30 % Überschuss) 1,1,1-Tris-(hydroxymethyl)-propan-monoallylether werden in einem 1-1-Vierhalskolben, ausgestattet mit Intensivkühler, Thermometer und Tropftrichter, zusammen mit 10 ppm eines Pt-haltigen Katalysators in inerter Atmosphäre auf 100 °C aufgeheizt. Bei Erreichen der Temperatur werden 463 g endständig Si-H-funktionalisiertes Polydimethylsiloxan der mittleren Kettenlänge N = 50 und der allgemeinen Formel HMe₂SiO(SiMe₂O)₅₀SiMe₂H (SiH-Wert: 0,54 mol H/kg) innerhalb von 30 Minuten zugetropft. Nach beendeter Zugabe wird das Reaktionsgemisch noch solange bei 100 °C gerührt, bis nach ca. 3 Stunden der Umsatz > 99,5 % erreicht wird.
   Nach Filtration von Katalysatorresten und Abdestillation der flüchtigen Reaktionsnebenprodukte und des Überschuss 1,1,1-Tris-(hydroxymethyl)-propan-monoallylether bei 150 °C/0,1 bar erhält man ein niedrigviskoses Öl mit einer Hydroxylzahl von 55 mg KOH/g, dem laut ¹H- und ²⁹Si-NMR-Spektren die allgemeine Formel zukommt: 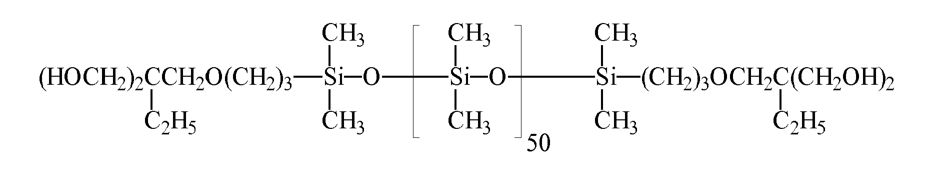
2b) Anlagerung von 4-Methylhexahydrophthalsäureanhydrid an das unter 2a) beschriebene α.ω-Bis-hydroxyalkylsiloxan:
   In einem Dreihalskolben, der mit einem Intensivkühler, Thermometer und Tropftrichter sowie einem Stickstoffanschluss ausgerüstet ist, werden in einer Stickstoffatmosphäre 168 g Methylhexahydrophthalsäureanhydrid und 1002 g des unter 2a) beschrie α.ω-Bis-hydroxyalkylsiloxan mit einer Hydroxylzahl von 55 mg KOH/g gemischt. Die Lösung wird auf 120 °C aufgeheizt und bei dieser Temperatur 6 Stunden gerührt. Das Produkt wird nach dem Abkühlen auf Raumtemperatur filtriert. Es wird ein klares, flüssiges Produkt erhalten.
   Gemäß ²⁹Si-NMR- und ¹³C-NMR-spektroskopischer Resultate besitzt das Endprodukt nachfolgende Struktur:

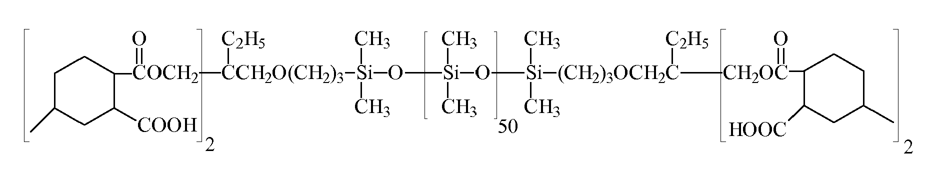

### Beispiel 3

3a) 227 g (30 % Überschuss) 1,1,1-Tris-(hydroxymethyl)-propan-monoallylether werden in einem 5-l-Vierhalskolben, ausgestattet mit Intensivkühler, Thermometer und Tropftrichter, zusammen mit 10 ppm eines Pt-haltigen Katalysators in inerter Atmosphäre auf 100 °C aufgeheizt. Bei Erreichen der Temperatur werden 1916 g end- und mittelständig Si-H-funktionalisiertes Polydimethylsiloxan der mittleren Kettenlänge N = 208 und der allgemeinen Formel HMe₂SiO (SiMeHO)₆(SiMe₂O)₂₀₀SiMe₂H (SiH-Wert: 0,522 mol H/kg) innerhalb von 30 Minuten zugetropft. Nach beendeter Zugabe wird das Reaktionsgemisch noch solange bei 100 °C gerührt, bis nach ca. 3 Stunden der Umsatz > 99,5 % erreicht wird.
   Nach Filtration von Katalysatorresten und Abdestillation der flüchtigen Reaktionsnebenprodukte und des Überschuss 1,1,1-Tris-(hydroxymethyl)-propan-monoallylether bei 150 °C/0,1 bar erhält man ein hochviskoses Öl mit einer Hydroxylzahl von 54 mg KOH/g, dem laut ¹H- und ²⁹Si-NMR-Spektren die allgemeine Formel zukommt: 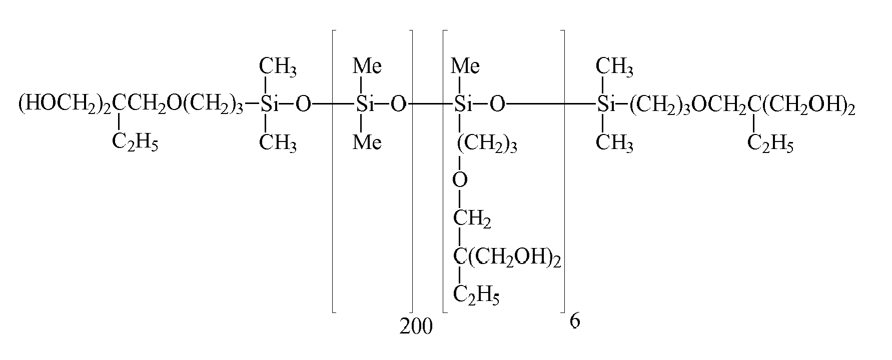
3b) Anlagerung von 4-Methylhexahydrophthalsäureanhydrid an das unter 3a) beschriebene α.ω-Bis-hydroxyalkylsiloxan:
   In einem Dreihalskolben, der mit einem Intensivkühler, Thermometer und Tropftrichter sowie einem Stickstoffanschluss ausgerüstet ist, werden in einer Stickstoffatmosphäre 168 g Methylhexahydrophthalsäureanhydrid und 1039 g des unter 3a) beschriebenen end- und mittelständigen Bis-hydroxyalkylsiloxan mit einer Hydroxylzahl von 54 mg KOH/g gemischt. Die Lösung wird auf 120 °C aufgeheizt und bei dieser Temperatur 6 Stunden gerührt. Das Produkt wird nach dem Abkühlen auf Raumtemperatur filtriert. Es wird ein klares, flüssiges Produkt erhalten.
   Gemäß ²⁹Si-NMR- und ¹³C-NMR-spektroskopischer Resultate besitzt das Endprodukt nachfolgende Struktur:

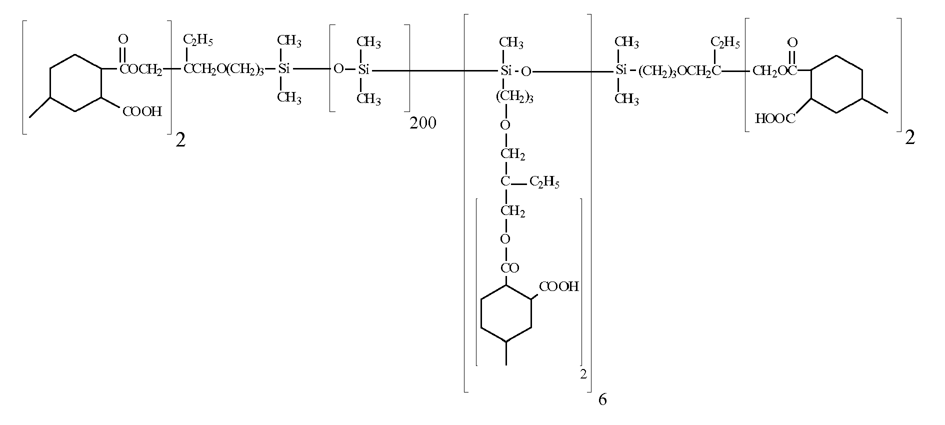

### Beispiel 4

4a) 227 g (30 % Überschuss) 1,1,1-Tris-(hydroxymethyl)-propan-monoallylether werden in einem 1-1-Vierhalskolben, ausgestattet mit Intensivkühler, Thermometer und Tropftrichter, zusammen mit 10 ppm eines Pt-haltigen Katalysators in inerter Atmosphäre auf 100 °C aufgeheizt. Bei Erreichen der Temperatur werden 710 g mittelständig Si-H-funktionalisiertes Polydimethylsiloxan der mittleren Kettenlänge N = 50 und der allgemeinen Formel Me₃SiO(SiMeH)₅(SiMe₂O)₄₃SiMe₃ (SiH-Wert: 1,41 mol H/kg) innerhalb von 30 Minuten zugetropft. Nach beendeter Zugabe wird das Reaktionsgemisch noch solange bei 100 °C gerührt, bis nach ca. 3 Stunden der Umsatz > 99,5 % erreicht wird.
   Nach Filtration von Katalysatorresten und Abdestillation der flüchtigen Reaktionsnebenprodukte und des Überschuss 1,1,1-Tris-(hydroxymethyl)-propan-monoallylether bei 150°C/0,1 bar erhält man ein mäßig viskoses Öl mit einer Hydroxylzahl von 127 mg KOH/g, dem laut ¹H- und ²⁹Si-NMR-Spektren die allgemeine Formel zukommt: 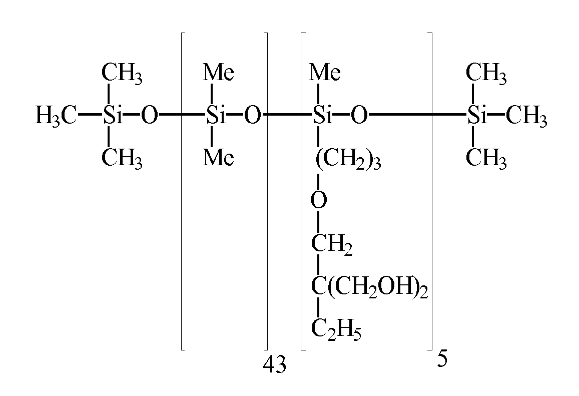
4b) Anlagerung von 4-Methylhexahydrophthalsäureanhydrid an das unter 4a) beschriebene mittelständige Bis-hydroxyalkylsiloxan:
   In einem Dreihalskolben, der mit einem Intensivkühler, Thermometer und Tropftrichter sowie einem Stickstoffanschluss ausgerüstet ist, werden in einer Stickstoffatmosphäre 336,5 g Methylhexahydrophthalsäureanhydrid und 884 g des unter 4a) beschriebenen mittelständigen Bis-hydroxyalkylsiloxan mit einer Hydroxylzahl von 127 mg KOH/g gemischt. Die Lösung wird auf 120 °C aufgeheizt und bei dieser Temperatur 6 Stunden gerührt. Das Produkt wird nach dem Abkühlen auf Raumtemperatur filtriert. Es wird ein klares, flüssiges Produkt erhalten.
   Gemäß ²⁹Si-NMR- und ¹³C-NMR-spektroskopischer Resultate besitzt das Endprodukt nachfolgende Struktur:

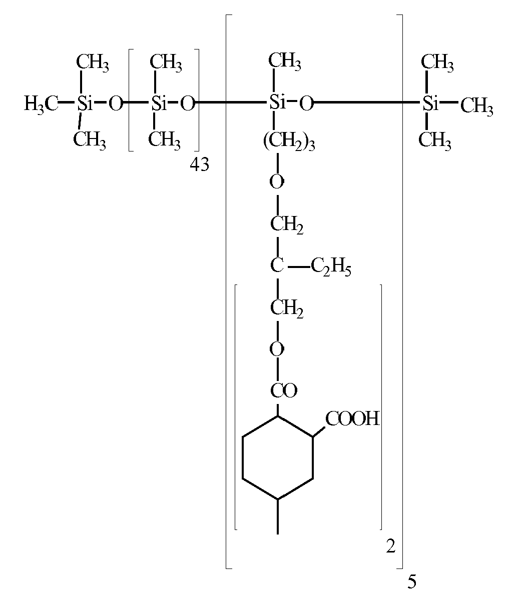

Die erfindungsgemäßen polycarboxyfunktionellen Polysiloxane werden zur Anwendung als Additiv in einem Gewichtsanteil zwischen 0,01 und 20 % in eine wässrige oder lösemittelhaltige Formulierung eingearbeitet. Die Anwendung erfindungsgemäßer polycarboxyfunktioneller Polysiloxane kann in Lösung oder als Emulsion erfolgen. Weitere Bestandteile der Formulierung neben dem Lösemittel und polycarboxyfunktionellen Polysiloxan in der Formulierung können beispielsweise Emulgatoren, Paraffin- und Mineralöle sein.

Mit der Verwendung der erfindungsgemäßen polycarboxyfunktionellen Polysiloxane erzielt man eine hervorragende Hydrophobierwirkung bei gleichzeitiger Verbesserung der Griffqualität. Dies wird ermöglicht durch das besondere Bauprinzip der erfindungsgemäßen polycarboxyfunktionellen Polysiloxane.

### Anwendungstechnischer Vergleich

### (Angaben in Gew.-% bezogen auf Gesamtformulierung)

Lederhydrophobierungsmittel werden idealerweise aus wässrigen Emulsionen (5 bis 30 %ig) unter Einsatz von Emulgatoren und standardisierten Bedingungen wie Temperatur und pH-Wert appliziert. Als Emulgatoren eignen sich im besonderen Maße C8 bis C24 Acylamidocarbonsäuren, z.B. Fettalkoholsarcosinate. Zur Bestimmung der Wirkungseigenschaften werden 10 %ige Emulsionen der erfindungsgemäßen Verbindungen (Beispiele 1 bis 4) hergestellt.

### Präparation einer Emulsion für die anwendungstechnische Ausprüfung

2,5 g einer 50 % NaOH und 1,3 g Zitronensäure werden in 43,6 g Wasser gelöst und auf 80°C erwärmt. Bei dieser Temperatur wird eine Mischung bestehend aus 31,3 g eines handelsüblichen paraffinischen Mineralöls, 10 g des erfindungsgemäßen polycarboxyfunktionellen Polysiloxans (Beispiele 1 bis 4) und 7,5 g Laurylsarcosinat (REWOPOL^{®} SK 275, Fa. Goldschmidt REWO) und 3,5 g Sulphosuccinat (REWOPOL^{®} SB FA 12 P, Fa. Goldschmidt REWO) sukzessive auf 85°C erwärmt, zugegeben und anschließend gerührt, bis eine homogene milchige Emulsion entsteht, die anschließend auf Raumtemperatur abgekühlt wird. Im Falle der Vergleichsproben wird bei der Herstellung der Emulsion das Siloxan weggelassen und durch handelsübliches paraffinisches Mineralöl (Vergleichsbeispiel a) mit Viskositäten von 40 bis 60 mPa s bei 25°C bzw. Silikonöl (Vergleichsbeispiel b)) mit Viskositäten von 50 bis 100 mPa s bei 25°C ersetzt.

Für die anwendungstechnische Ausprüfung zur Bestimmung der einfachen Wasseraufnahmemenge wird Wet-blue LGR Standard der Falzstärke 2 mm nach der folgenden Vorschrift behandelt und geprüft:
4 x 4 cm große Stücke Wet-blue Leder werden zunächst mit 300 Gew.-%, bezogen auf das Gewicht des Leders, einer wässrigen, basischen Lösung neutralisiert und anschließend mit Wasser neutral gewaschen. Anschließend wird das Leder 90 Minuten bei 50 °C in der 2 %igen Emulsion bei pH 5,5 behandelt. Danach wird mit Ameisensäure in mehreren Schritten über einem Zeitraum von 40 Minuten bis auf pH 3,5 abgesäuert. Nach zweimaligem Waschen mit 300 und 150 % Wasser wird nochmals für 60 Minuten bei 40°C mit Chromsalz (Chromosal^{®} BD, Fa. Lanxess) nachfixiert. Das anschließende Trocknen bei 45°C für 30 Minuten erfolgt nach zweimaligem Waschen mit 400 % Wasser bei 35 °C und 25 °C. Das Leder wird anschließend bei konstanter 50 %iger relativer Luftfeuchte und konstanten 21°C für 7 Tage konditioniert. Anschließend wird das so behandelte Lederstück in 300 ml Wasser bei 20 °C gelagert. Die Wasseraufnahme wurde nach Entfernung anhaftender Wassertropfen durch Wägung bestimmt.

Die Gewichtsdifferenz, verursacht durch die Wasseraufnahme, ist in %, bezogen auf das trockene, imprägnierte Leder, angegeben.

Die Ergebnisse sind in der nachfolgenden Tabelle 1 aufgeführt.

**Tabelle 1**

| Beispiel/Additiv | Wasseraufnahme nach 6 Stunden(%) | Wasseraufnahme nach 24 Stunden(%) |
|---|---|---|
| Vergleichsprobe a) | 103 | 190 |
| Verbindung 1 | 80 | 130 |
| Verbindung 2 | 72 | 121 |
| Verbindung 3 | 75 | 122 |
| Verbindung 4 | 78 | 130 |

Wie ersichtlich, wird das Wasseraufnahmevermögen von Leder nach der Behandlung mit den erfindungsgemäßen polycarboxyfunktionellen Organosiloxanylderivaten deutlich herabgesetzt.

Für die anwendungstechnische Ausprüfung nach dem Measertest (ASTM D 2059-99) wird Wet-blue LGR Standard der Falzstärke 2 mm nach einem Verfahren zur Herstellung von Schuhoberleder, wie im Folgenden beschrieben, behandelt und hydrophobiert(alle Angaben in Gew.-% bezogen auf das Falzgewicht des Leders):
Das Ausgangsmaterial wird bei 35°C mit 200 % Wasser gewaschen und mit 0,5 % Ameisensäure in 20 Minuten auf einen pH von 3,2 eingestellt.

Die Nachchromierung läuft in folgenden Schritten nach Ablassen der Flotte:
Zu 100 % Wasser bei 35 °C werden 4,0 % eines Aluminium-Syntans (z.B. Trupotan^{®} UK, Fa. Trumpler) und 3,0 % eines Chromgerbstoffes (z.B. Chromosal^{®} B-D, Fa. Lanxess) zugegeben und 45 Minuten behandelt, ehe durch Zugabe von 1,0 % Natriumformiat für weitere 45 Minuten auf pH 4 eingestellt wird.

Nach Ablassen der Flotte, Waschen bei 35°C mit 300 % Wasser, erneutem Ablassen wird wie folgt neutralisiert: Nach Zugabe von 150 % Wasser bei 35 °C und 4,0 % eines Neutralisationsgerbstoffes (z.B. Trupotan® NG Fa. Trumpler) wird 60 Minuten behandelt. Anschließend werden 3,0 % eines Polymer-Nachgerbstoffes (z.B. Trupotan^{®} AMP Fa. Trumpler) zugegeben und für 20 Minuten behandelt. Zuletzt werden 3,0 % eines natürliches Polymers (z.B. Trupotan^{®} UPH Fa. Trumpler) und nochmals 60 Minuten behandelt, wobei sich schließlich ein pH-Wert von 5,6 einstellt, bevor die Flotte abgelassen wird.

Vor der Nachgerbung wird mit 300 % Wasser für 20 Minuten gewaschen, die Flotte abgelassen und mit 80 % Wasser von 25 °C versetzt. Anschließend werden 2,5 % der Beispielformulierung, basierend auf den jeweiligen erfindungsgemäßen Verbindungen bzw. dem nichterfindungsgemäßen Vergleichsbeispiel b) und 3,0 % eines Polymer-Nachgerbstoffes (z.B. Trupotan^{®} RKM, Fa. Trumpler), hinzugegeben und für 20 Minuten behandelt.

Nach dem Färben bei 50°C wird mit 2,0 Ameisensäure für 45 Minuten auf pH 3,8 eingestellt und die Flotte abgelassen.

Vor der Fettung wird erneut mit 300 % Wasser bei 50°C für 20 Minuten gewaschen und abgelassen. Für die Fettung werden 200 % Wasser auf 50°C erwärmt, 5,0 % der Beispielformulierung die erfindungsgemäße Verbindung enthaltend, bzw. das nichterfindungsgemäße Vergleichsbeispiel b) hinzugegeben und für 45 Minuten behandelt, ehe mit 1,0 % Ameisensäure über 45 Minuten auf ph 3,6 abgesäuert und die Flotte abgelassen wird.

Zur Fixierung wird nach dem Waschen bei 35°C mit 300 % Wasser für 35 Minuten und Ablassen der Flotte das Leder mit 150 % Wasser bei 35°C, 3,0 % eines Chromgerbstoffes (z.B. Chromosal^{®} B-D, Fa. Lanxess) und 0,4 % eines Fixiermittels (z.B. Trupofix^{®} WP, Fa. Trumpler) für 90 Minuten behandelt. Nach Ablassen der Flotte wird 3-mal mit je 300 % Wasser bei 50°C gewaschen.

Vor der Messung wird das Leder über Nacht ausgereckt, vakuumiert, hängegetrocknet, konditioniert und anschließend gestollt.

Zur Bestimmung der wasserabweisenden Eigenschaften wird der Measertest nach ASTM D 2059-99 durchgeführt. Die Ergebnisse sind in der nachfolgenden Tabelle zusammengefasst.

**Tabelle 2**

| Beispiel/Additiv | Anzahl der Knickungen (Mittelwert) bei Wasserdurchtritt |
|---|---|
| Vergleichsprobe b) | 3530 |
| Verbindung 1 | 20500 |
| Verbindung 2 | > 45600 |
| Verbindung 3 | 25300 |
| Verbindung 4 | 30240 |

Die sehr hohe Anzahl der Knickungen bis zum Wasserdurchtritt bestätigt die sehr guten hydrophobierenden Eigenschaften der die erfindungsgemäße Verbindung enthaltende Emulsion, da in der Regel ein Schuhoberleder als gut hydrophobiert gilt, wenn ein Wasserdurchtritt bei 15 000 bis 20 000 Knickungen erfolgt.

## Patentansprüche

1. Organosiloxanverbindungen, enthaltend end- und/oder seitenständig mindestens einen mehrfach polycarboxylierten, organischen Rest, der im Mittel ≥ 1 Carboxylgruppen aufweist, erhältlich durch Anlagerung von Organopolysiloxanen der allgemeinen Formel I 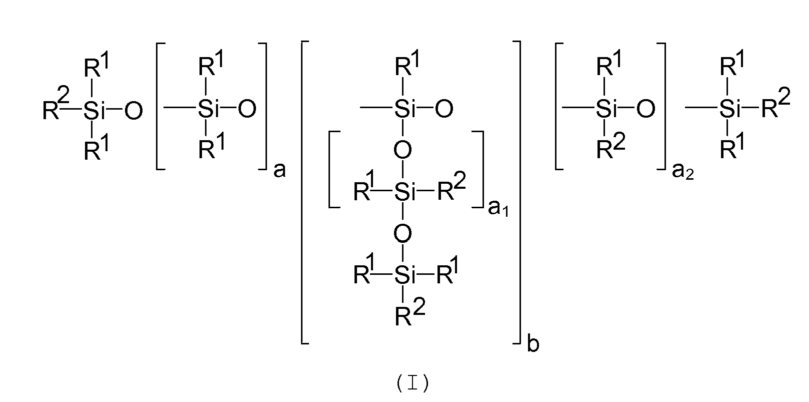 worin die Substituenten und Indices bedeuten:
R¹ = gleiche oder verschiedene, aliphatische oder aromatische Kohlenwasserstoffreste mit 1 bis 10 C-Atomen,
R² = R¹ oder H, mit der Maßgabe, dass mindestens ein Rest R² gleich H ist,
a, a₁, a₂ sind gleich oder verschieden = 0 bis 500,
b = 0 bis 20,
an Polyhydroxyalkenylether der allgemeinen Formel II
H₂C=CH-(CH₂)_{c}-O-CH₂-R³-[(CH₂-O-(CR⁴H-CH₂-O)ₑ-H)]_{d} (II)
R³ = ein gegebenenfalls Etherbrücken enthaltender linearer, cyclischer, aromatischer oder verzweigter Kohlenwasserstoffrest mit 1 bis 20 C-Atomen,
R⁴ = H oder ein C₁ bis C₃ Alkylrest oder ein Phenylrest,
c = 0 bis 10,
d = 2 bis 10,
e = 0 bis 40,
in Gegenwart von Platin- oder Rhodiumkatalysatoren und anschließender Umsetzung mit, bezogen auf Hydroxylgruppen, 0,6- bis 1,2-molaren Mengen organischer Carbonsäureanhydride der allgemeinen Formel 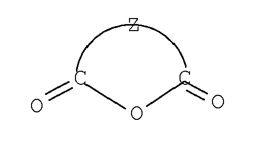 wobei
Z = zweiwertiger Kohlenwasserstoffrest, ausgewählt aus der Gruppe 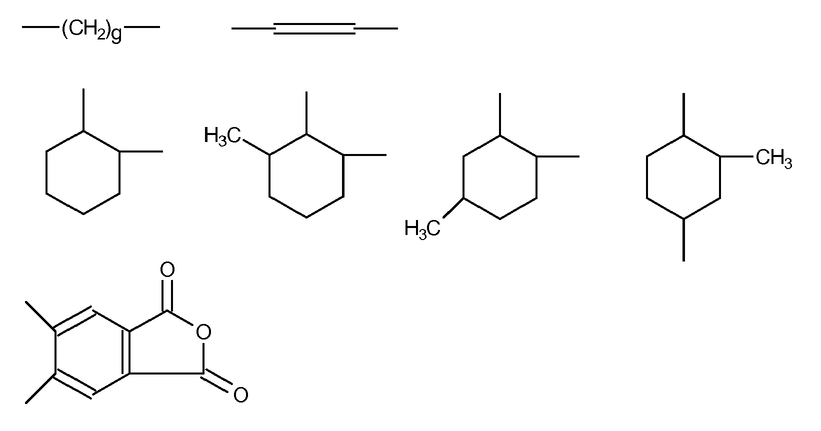 mit
g = 1 bis 12
umsetzt.

2. Polycarboxyfunktionelle Siloxane gemäß Anspruch 1, **dadurch gekennzeichnet, dass** mindestens 90 % der Reste R¹ Methylreste sind.

3. Polycarboxyfunktionelle Siloxane gemäß Anspruch 1 und/oder 2, **dadurch gekennzeichnet, dass** der Rest R³ ein Alkylrest mit 1 bis 20 C-Atomen ist.

4. Polycarboxyfunktionelle Siloxane gemäß mindestens einem der Ansprüche 1 bis 3, **dadurch gekennzeichnet, dass**
c) = 0 bis 6 und
d) = 2 bis 6
ist.

5. Wässrige Dispersionen oder Emulsionen, enthaltend polycarboxyfunktionelle Siloxane gemäß mindestens einem der Ansprüche 1 bis 4, in Konzentration von 0,01 bis 50 Gew.-%.

6. Verwendung von polycarboxyfunktionellen Siloxanen nach Anspruch 1 als Zusatzstoff in Konzentrationen von 0,01 bis 50,0 Gew.-%, bezogen auf die Gesamtformulierung, zur Behandlung von Leder.

7. Verwendung von polycarboxyfunktionellen Siloxanen nach Anspruch 1 als Zusatzstoff in Konzentrationen von 0,01 bis 50,0 Gew.-%, bezogen auf die Gesamtformulierung, zur Behandlung von textilen Flächengebilden.
